(19) Europäisches Patentamt
European Patent Office
Office européen des brevets

(11) **EP 4 733 257 A1**

(12) **EUROPEAN PATENT APPLICATION**
published in accordance with Art. 153(4) EPC

(43) Date of publication:
**29.04.2026 Bulletin 2026/18**

(21) Application number: **24825609.1**

(22) Date of filing: **15.05.2024**

(51) International Patent Classification (IPC):
*C01B 39/02* (2006.01)  *B01D 53/94* (2006.01)
*B01J 29/70* (2006.01)  *B01J 37/08* (2006.01)
*B01J 37/30* (2006.01)  *F01N 3/10* (2006.01)
*F01N 3/28* (2006.01)

(52) Cooperative Patent Classification (CPC):
**B01D 53/94; B01J 29/70; B01J 37/08; B01J 37/30; C01B 39/02; F01N 3/10; F01N 3/28**

(86) International application number:
**PCT/JP2024/017961**

(87) International publication number:
**WO 2024/262200 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 JP 2023100638**

(71) Applicant: **CATALER CORPORATION**
**Kakegawa-shi, Shizuoka 437-1492 (JP)**

(72) Inventors:
• **OGAWA, Ryoichi**
  **Kakegawa-shi, Shizuoka 437-1492 (JP)**
• **TOGASHI, Hiromi**
  **Kakegawa-shi, Shizuoka 437-1492 (JP)**
• **ONOHARA, Yu**
  **Kakegawa-shi, Shizuoka 437-1492 (JP)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(54) **SILVER-SUPPORTED ZEOLITE, EXHAUST GAS PURIFICATION CATALYST, EXHAUST GAS PURIFICATION DEVICE, EXHAUST GAS PURIFICATION METHOD, AND METHOD FOR PRODUCING SILVER-SUPPORTED ZEOLITE**

(57)    The purpose of the present invention is to provide: a silver-supported zeolite that has excellent hydrocarbon (HC) adsorption properties; an exhaust gas purification catalyst; an exhaust gas purification device; an exhaust gas purification method; and a method for producing the silver-supported zeolite. The present invention pertains to a silver-supported zeolite. The silver exists as at least one of silver ions, a silver elemental substance, and a silver compound. The contained proportion of silver ions included in the silver is 0.910 or more. The content of the silver is 15.0 mass% or less with respect to the total weight of the silver-supported zeolite.

Fig. 1

**Description**

FIELD

The present invention relates to silver-supporting zeolite, an exhaust gas purification catalyst, an exhaust gas purification device, an exhaust gas purification method and a method for producing silver-supporting zeolite.

BACKGROUND

Addition of silver to zeolite has been investigated with the goal of improving the gas adsorption properties of zeolite. Zeolite with satisfactory gas adsorption properties can be used as an exhaust gas purification catalyst for purification of hydrocarbons (HC), nitrogen oxides ($NO_X$) and carbon monoxide (CO) in exhaust gas emitted from engines such as automobile engines.

PTL 1, for example, describes a silver-supporting zeolite compact having a $Si/Al_2$ molar ratio of 2.0 to 3.0, an (alkali metal + Ag)/Al molar ratio of 0.9 to 1.1, a total amount of $SiO_2$, $Al_2O_3$, $Ag_2O$ and alkali metal oxide of 90 wt% or greater, and a silver ion content of 5 wt% or greater, using only a single type of zeolite. According to PTL 1, silver aggregation is inhibited and a zeolite compact with excellent silver dispersibility can be provided, compared to silver-supporting zeolite of the prior art.

PTL 2 describes an exhaust gas purification catalyst comprising a hydrocarbon adsorbent layer composed mainly of zeolite with Ag supported on the innermost layer of the catalyst, the outermost layer being provided with a combustion catalyst layer containing at least one noble metal catalyst component from among palladium, platinum and rhodium and an oxygen storage/release material, and an oxygen storage/release material monolayer being formed between the layers. According to PTL 2, a monolayer of an oxygen storage/release material is provided between the combustion catalyst layer as the outermost layer and the hydrocarbon adsorbent layer as the innermost layer, whereby it is possible to lower the reducing power of the processing gas, and to efficiently accomplish combustion purification even with a reducing atmosphere having a high $H_2$ or CO concentration, without impairing the HC retention, and to allow application for purification of a wide range of exhaust gas types without selection of the processing gas atmosphere.

PTL 3 describes a method of treating a radioactive iodine-containing fluid, wherein a radioactive iodine-containing fluid is passed through an iodine adsorbent comprising a silver-containing binderless zeolite compact with a silver content of 50 wt% or lower, and the radioactive iodine is adsorbed onto the iodine adsorbent. According to PTL 3, the silver-containing binderless zeolite compact having a high silver content and supporting silver in a uniformly dispersed state without aggregation has high iodine adsorption performance per unit volume, and allows economical adsorption removal of radioactive iodine in fluids such as radioactive waste liquid or gas.

PTL 4 describes a hydrocarbon adsorbent comprising Ag, forming either an alloy with Ag or a metal oxide or complex oxide containing Ag, and an alloy with Ag which has a higher melting point than Ag alone, or a component that forms an Ag-containing metal oxide or complex oxide. According to PTL 4, it is possible to prevent reduction in adsorption performance of Ag-containing adsorbents.

[CITATION LIST]

[PATENT LITERATURE]

[PTL 1] Japanese Unexamined Patent Publication No. 2017-154985
[PTL 2] Japanese Unexamined Patent Publication No. 2005-144253
[PTL 3] International Patent Publication No. WO2017/146130
[PTL 4] Japanese Unexamined Patent Publication No. 2006-21153

SUMMARY

[TECHNICAL PROBLEM]

It is an object of the present invention to provide silver-supporting zeolite having excellent hydrocarbon (HC) adsorption properties, an exhaust gas purification catalyst, an exhaust gas purification device, an exhaust gas purification method and a method for producing silver-supporting zeolite.

[SOLUTION TO PROBLEM]

The invention achieves the object described above by the following means.

<Aspect 1>

Silver-supporting zeolite wherein:

the silver is present as at least one type from among silver ion, elemental silver and silver compounds,
the silver ion content ratio in the silver is 0.910 or greater, and
the silver content is 15.0 mass% or lower with respect to the total weight of the silver-supporting zeolite.

<Aspect 2>

The silver-supporting zeolite according to aspect 1, wherein the silver-supporting zeolite has a BEA-type crystal structure.

<Aspect 3>

The silver-supporting zeolite according to aspect 1 or 2, wherein the SAR of the silver-supporting zeolite is 20 to 40.

<Aspect 4>

An exhaust gas purification catalyst comprising silver-supporting zeolite according to any one of aspects 1 to 3.

<Aspect 5>

An exhaust gas purification device comprising a honeycomb substrate and an exhaust gas purification catalyst according to aspect 4 supported on the honeycomb substrate.

<Aspect 6>

An exhaust gas purification method which comprises purifying exhaust gas with an exhaust gas purification catalyst according to aspect 4.

<Aspect 7>

The method for producing silver-supporting zeolite according to any one of aspects 1 to 3, the method comprising:

ion-exchange treatment of zeolite with a silver-containing aqueous solution, and
firing of the ion-exchanged zeolite at below 500°C.

[ADVANTAGEOUS EFFECTS OF INVENTION]

The silver-supporting zeolite, exhaust gas purification catalyst, exhaust gas purification device and exhaust gas purification method of the invention allow HC to be efficiently adsorbed. The method for producing silver-supporting zeolite according to the invention can be used to obtain silver-supporting zeolite according to the invention.

BRIEF DESCRIPTION OF DRAWINGS

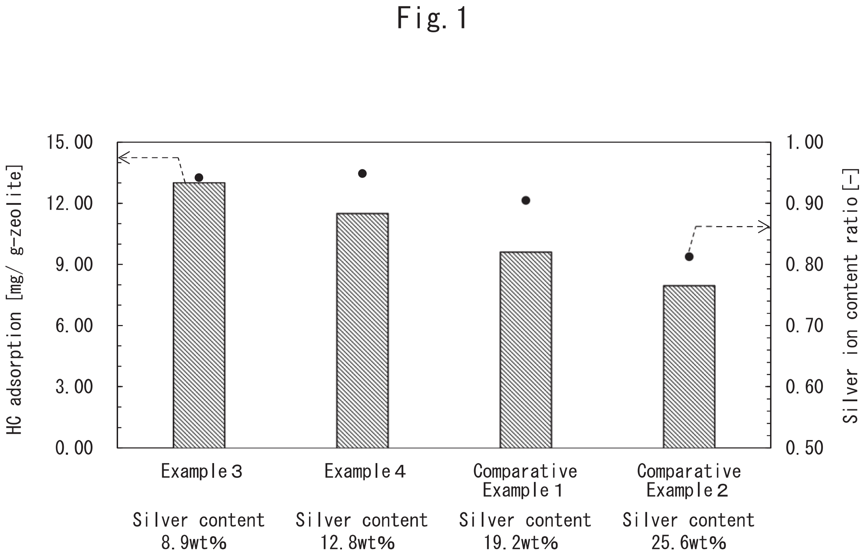

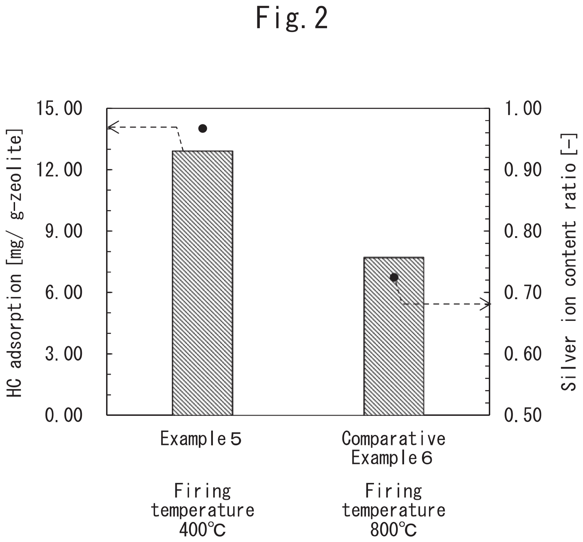

Fig. 1 is a graph showing HC adsorption and silver ion content ratios for silver-supporting zeolite having different silver contents, fired at 400°C. The bar graphs represent HC adsorption, and the points represent silver ion content ratios. Fig. 2 is a graph showing HC adsorption and silver ion content ratios for silver-supporting zeolites with a silver content of 8.9 wt%, fired at different temperatures. The bar graphs represent HC adsorption, and the points represent silver ion content ratios.

## DESCRIPTION OF EMBODIMENTS

Embodiments of the invention will now be described in detail. The present invention is not limited to the embodiments described below, and various modifications may be implemented within the scope of the gist thereof.

<Silver-supporting zeolite>

In the silver-supporting zeolite of the invention,

the silver is present as at least one type from among silver ion, elemental silver and silver compounds,
the silver ion content ratio in the silver is 0.910 or greater, and
the silver content is 15.0 mass% or lower with respect to the total weight of the silver-supporting zeolite.

The silver-supporting zeolite of the invention can efficiently adsorb HC.
Silver-supporting zeolite has been investigated with the aim of improving the gas adsorption properties of zeolite, with the silver in silver-supporting zeolite being present in the form of silver ions, elemental silver (metal silver, silver clusters) and silver compounds, and the state of the silver being considered to have an effect on the gas adsorption property. When silver is present as metallic silver or silver clusters, the metallic silver or silver clusters obstruct the zeolite pores, resulting in reduced gas adsorption properties of the silver-supporting zeolite.
The silver-supporting zeolite of the invention not only has silver supported in a fixed amount on zeolite, but also has more of the silver supported as silver ion, and it therefore has a relatively low abundance of elemental silver or silver clusters that inhibit HC adsorption. It is conjectured that the silver-supporting zeolite exhibits satisfactory HC adsorption properties due to increased HC adsorption as a result of the supported silver, and reduced zeolite pore occlusion.
It has also been found that the silver-supporting zeolite of the invention does not undergo significant change in the proportion of silver ions even when exposed to a high-temperature environment. The silver-supporting zeolite of the invention is therefore also promising as a gas adsorption material to be used in high-temperature environments such as automobile exhaust gas purification catalysts.

<Silver form>

The silver in the silver-supporting zeolite is present as at least one type selected from among silver ions, elemental silver and silver compounds.
The silver is not particularly restricted and may be silver ion, metal silver or silver clusters. The location of the silver is also not particularly restricted, and it may be present on the surface of the zeolite or present in the zeolite pores.
The mechanism of loading the silver onto the zeolite is not particularly restricted and may be electrostatic interaction, ionic bonding, covalent bonding or physical adsorption between the zeolite and silver. The silver may also be supported on the zeolite by components other than silver and zeolite, such as an organic binder, inorganic binder, coupling agent or surface treatment agent.

<Silver ion content ratio>

The silver-supporting zeolite has a silver ion content ratio of 0.910 or higher in the silver.
From the viewpoint of obtaining silver-supporting zeolite with a higher adsorption property, the silver ion content ratio of the silver-supporting zeolite of the invention is preferably 0.910 or higher, although this is not particularly restrictive. This is presumably because silver ions contribute to the adsorption properties, whereas components other than silver ions (such as metallic silver or silver clusters) do not contribute to the adsorption properties.
The silver ion content ratio may be 0.920 or higher, 0.940 or higher, 0.960 or higher or 0.980 or higher. The silver ion content ratio may also be 1.000 or lower, 0.995 or lower or 0.990 or lower.
The silver ion content ratio can be determined by UV-vis measurement. Specifically, barium sulfate is used as the standard substance for measurement of the UV-vis spectrum of the silver-supporting zeolite of the invention by a diffuse reflection method. The powder weight is then determined and outputted after Kubelka-Munk conversion. After waveform separation of the obtained UV-vis spectrum, it is possible to identify in the waveform-separated UV-vis spectrum a peak having a peak top with a wavelength of 200 nm to 250 nm as the peak for silver ion, and peaks having peak tops with a wavelength of 250 nm to 600 nm as peaks other than silver ion. The silver ion content ratio in the silver-supporting zeolite can be determined from the peak area of the obtained peaks.
Components other than silver ion in the silver-supporting zeolite ("inhibiting silver"), can be calculated by the following formula, without being particularly restrictive.

$$\text{(Inhibiting silver content ratio)} = 1 - \text{(Silver ion content ratio)}$$

<Silver content>

The silver content of the silver-supporting zeolite is 15.0 mass% or lower with respect to the total weight of the silver-supporting zeolite.

From the viewpoint of obtaining silver-supporting zeolite with a high silver ion content ratio, the silver content of the silver-supporting zeolite of the invention may be, but is not particularly restricted to, 15.0 mass% or lower.

The silver content may be 13.0 mass% or lower, 11.0 mass% or lower or 9.0 mass% or lower.

Considering that a higher silver content will generally increase the adsorption properties, the silver content of the silver-supporting zeolite of the invention may be, but is not particularly restricted to, 2.0 mass% or higher, 4.0 mass% or higher or 6.0 mass% or higher.

The silver content can be determined by fluorescent X-ray analysis (XRF). Specifically, Axios advanced (product of PANalytical) may be used for measurement of the powder by quantitative analysis (calibration curve method).

<Zeolite crystal structure>

The silver-supporting zeolite is not particularly restricted and may have a BEA-type crystal structure.

The crystal structure of the silver-supporting zeolite may be, but is not limited to, a BEA-type, LTA-type, FER-type, MWW-type, MFI-type, MOR-type, LTL-type or FAU-type structure. One or more zeolites with a crystal structure may also be present. A BEA type is preferred from the viewpoint of obtaining a large pore size and increasing adsorption of HC present in automobile exhaust gas.

<Zeolite SAR>

The silver-supporting zeolite may have a SAR of 20 to 40, without being restrictive.

Zeolite is generally a complex oxide of $SiO_2$ and $Al_2O_3$. The SAR is the $SiO_2/Al_2O_3$ ratio, and it is the content ratio of $SiO_2$ with respect to $Al_2O_3$.

If some of the Si in the zeolite backbone is replaced by Al, a portion of the zeolite backbone will be negatively charged, allowing cations to be taken up into the zeolite pores. Zeolite with a high SAR is most generally a complex oxide composed of $SiO_2$, and although it has high durability and heat resistance, its ion-exchange capacity allowing it to undergo ion-exchange with cations is low, although not in all cases.

The SAR of the silver-supporting zeolite is not particularly restricted, but it is preferably 20 or greater from the viewpoint of durability of the zeolite and its application in the temperature range of automobile exhaust gas.

The lower limit for the SAR may be 22 or greater, 24 or greater or 28 or greater.

The SAR of the silver-supporting zeolite is also preferably 40 or lower from the viewpoint of supporting a large amount of silver, although this is not limitative.

The upper limit for the SAR may be 38 or lower, 36 or lower, 34 or lower, 32 or lower or 30 or lower.

<Exhaust gas purification catalyst>

The exhaust gas purification catalyst of the invention comprises silver-supporting zeolite of the invention.

The exhaust gas purification catalyst is not particularly restricted, and it may be one having a noble metal supported on an inorganic oxide substrate. Examples of noble metals that may be used include one or more selected from among silver, gold, copper, nickel, palladium, platinum, cobalt, rhodium, iridium and ruthenium, with no limitation to these. Examples of inorganic oxide base materials that may be used include one or more selected from among zeolite ($SiO_2/Al_2O_3$ complex oxide), alumina ($Al_2O_3$), zirconia ($ZrO_2$), magnesium oxide (MgO), lanthanum oxide ($La_2O_3$), cerium oxide ($CeO_2$), neodymium oxide ($Nd_2O_3$) and yttrium oxide ($Y_2O_3$), with no limitation to these. The exhaust gas purification catalyst preferably comprises silver-supporting zeolite of the invention from the viewpoint of a high HC adsorption property.

The exhaust gas purification catalyst is not particularly restricted, and it may be used for purification of hydrocarbons (HC), nitrogen oxides ($NO_X$) and carbon monoxide (CO) emitted from an engine such as an automobile engine. Because the silver-supporting zeolite of the invention has a high HC adsorption property, it is preferably used as an HC adsorption catalyst in the exhaust gas purification catalyst of the invention.

<Exhaust gas purification device>

The exhaust gas purification device comprises a honeycomb substrate, and silver-supporting zeolite of the invention supported on the honeycomb substrate.

The shape of the substrate may be a honeycomb shape, for example. The material for the device may be, for example, a ceramic such as alumina ($Al_2O_3$), mullite ($3Al_2O_3$-$2SiO_2$), cordierite ($2\,MgO$-$2Al_2O_3$-$5SiO_2$), aluminum titanate ($Al_2TiO_5$) or silicon carbide (SiC).

The method for producing the exhaust gas purification device is not particularly restricted, and it may be a method of preparing a slurry containing the silver-supporting zeolite and a binder as necessary, coating it onto a honeycomb substrate, and then drying and firing it.

<Exhaust gas purification method>

The exhaust gas purification method of the invention comprises purification of exhaust gas using silver-supporting zeolite according to the invention.

The exhaust gas purification method is not particularly restricted, and a method of contacting exhaust gas from an internal combustion engine to purify the exhaust gas may be employed. The internal combustion engine is not particularly restricted, and any publicly known internal combustion engine may be used as appropriate, such as a gasoline vehicle engine, a diesel engine or a lean-burn engine with low fuel consumption.

<Method for producing silver-supporting zeolite>

The method of the invention for producing silver-containing zeolite comprises:

ion-exchange treatment of zeolite with a silver-containing aqueous solution, and
firing of the ion-exchange treated zeolite at below 500°C.

The method for producing silver-supporting zeolite according to the invention can be used to obtain silver-supporting zeolite with a high silver ion content ratio.

The present inventors focused on silver content and firing temperature to obtain silver-supporting zeolite with a high silver ion content ratio.

The present inventors have found that silver-supporting zeolite with a high silver ion content ratio is obtained when the silver content is 15.0 mass% or lower. The reason why such silver-supporting zeolite is obtained is not fully understood, but it is conjectured that a silver content of 15.0 mass% or lower reduces the abundance of silver in the zeolite and inhibits aggregation between the silver molecules, thereby inhibiting formation of metallic silver or silver clusters.

The present inventors have also found that when zeolite that has been subjected to ion-exchange treatment with silver ions is fired at low temperature (specifically, below 500°C), it is possible to obtain silver-supporting zeolite with a high silver ion content ratio even after firing. The reason why such silver-supporting zeolite is obtained is not fully understood, but it is conjectured that low temperature firing inhibits thermal diffusion of the silver-containing compound (specifically, silver nitrate) in the ion-exchanged zeolite, resulting in decomposition while maintaining the dispersed state of the silver-containing compound.

<Silver-containing aqueous solution>

The silver-containing aqueous solution supplied for ion-exchange treatment is not particularly restricted, and may be an aqueous solution comprising a silver compound. For example, the silver-containing aqueous solution may be, but is not limited to, an aqueous solution of one or more selected from among silver nitrate, silver sulfate, silver acetate and silver chloride, dissolved in water. The silver concentration of the silver-containing aqueous solution is not particularly restricted and may be as desired.

<Ion-exchange treatment>

The treatment method for ion-exchange of silver with the zeolite is not particularly restricted, and for example, it may be a method of stirring in a silver-containing aqueous solution without pulverizing the zeolite, or a method of circulating the silver-containing aqueous solution through the zeolite that has been packed into a column. The reactor, mixing time and circulation volume are not particularly restricted and may be as desired. Zeolite that has been subjected to ion-exchange treatment using a silver-containing aqueous solution is not particularly restricted, and it may be dried to remove the moisture. The drying conditions may be, but are not limited to, 80°C for 12 hours or longer, or 250°C for 12 hours or longer.

<Firing>

The firing temperature for the ion-exchanged zeolite is preferably below 500°C from the viewpoint of increasing the silver ion content ratio of the silver-supporting zeolite.

The firing temperature may be lower than 450°C or lower than 420°C. The firing temperature may also be 360°C or higher, 380°C or higher or 400°C or higher.

EXAMPLES

The invention will now be explained in further detail by Examples, with the understanding that the scope of the invention is not limited by the Examples.

<Example 1>

<Production of silver-supporting zeolite A>

To 40 g of distilled water there was added 0.76 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite A.

<Silver content of silver-supporting zeolite A>

Axios advanced (product of PANalytical) was used for XRF analysis to determine the silver content of the silver-supporting zeolite A. The silver-supporting zeolite A was pulverized to 250 $\mu$m or smaller and used for quantitative analysis (calibration curve method). The silver content of the silver-supporting zeolite A was confirmed to be 2.2 mass%.

<Silver ion content ratio of silver-supporting zeolite A>

UV-2600 (product of Shimadzu Corp.) was used to determine the silver ion content ratio of the silver-supporting zeolite A by diffuse reflection. The standard powder used was barium sulfate, and the measuring wavelength was 200 to 600 nm. The obtained measured values were used to determine the powder weights which were outputted after Kubelka-Munk conversion.

In regard to the outputted data, absorption at 200 to 250 nm was recorded as silver ion and 250 to 600 nm as silver other than silver ion, with the silver ion content ratio being calculated as the absorption up to 250 nm with respect to the total absorption. The silver ion content ratio of the silver-supporting zeolite A was confirmed to be 0.962.

<Content ratio of inhibiting silver in silver-supporting zeolite A>

Silver other than silver ion in the silver-supporting zeolite A was calculated by the following formula, assuming it to be present as inhibiting silver. The content ratio of the inhibiting silver in the silver-supporting zeolite A was confirmed to be 0.038.

$$\text{Inhibiting silver content ratio} = 1 - \text{silver ion content ratio}$$

<Example 2>

<Production of silver-supporting zeolite B>

To 40 g of distilled water there was added 1.90 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite B. The silver content, silver ion content ratio and inhibiting silver content ratio of the silver-supporting zeolite B were determined by the same methods as for silver-supporting zeolite A. The silver-supporting zeolite B had a silver content of 6.4 mass%, a silver ion content ratio of 0.983 and an inhibiting silver content ratio of 0.017.

<Example 3>

<Production of silver-supporting zeolite C>

To 40 g of distilled water there was added 3.04 g of silver nitrate, and the components were mixed until dissolution. Next, 20 g of BEA zeolite powder with a SAR ($SiO_2$/$Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite C. The silver content, silver ion content ratio and inhibiting silver content ratio of the silver-supporting zeolite C were determined by the same methods as for silver-supporting zeolite A. The silver-supporting zeolite C had a silver content of 8.9 mass%, a silver ion content ratio of 0.942 and an inhibiting silver content ratio of 0.058.

<HC adsorption of silver-supporting zeolite C>

The HC adsorption was determined by HC-TPD (Hydrocarbon-Temperature Programmed Desorption). The sample for the HC adsorption test was prepared by compressing and shredding the silver-supporting zeolite C and molding it into pellets. The HC adsorption test used was a propylene-containing gas as the model gas. The model gas was adsorbed to saturation under the following conditions, and the accumulated amount of difference between input and output was recorded as the adsorption. The HC adsorption of the silver-supporting zeolite C was 13.00 mg/g-zeolite.

HC adsorption test conditions

    (1) Pretreatment: Atmosphere: $O_2$ 1%

        Temperature: 500°C
        Measuring time: 5 minutes

    (2) Saturated adsorption: Atmosphere: propylene: 600 ppm, $H_2O$ 3%

        Temperature: 100°C
        Measuring time: Until breakage

<Example 4>

<Production of silver-supporting zeolite D>

To 40 g of distilled water there was added 3.78 g of silver nitrate, and the components were mixed until dissolution. Next, 20 g of BEA zeolite powder with a SAR ($SiO_2$/$Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite D. The silver content, silver ion content ratio and inhibiting silver content ratio of the silver-supporting zeolite D were determined by the same methods as for silver-supporting zeolite A. The silver-supporting zeolite D had a silver content of 12.8 mass%, a silver ion content ratio of 0.949 and an inhibiting silver content ratio of 0.051.

<HC adsorption of silver-supporting zeolite D>

The HC adsorption of the silver-supporting zeolite D was determined by the same method as Example 3. The HC adsorption of the silver-supporting zeolite D was 11.48 mg/g-zeolite.

<Example 5>

<Production of silver-supporting zeolite E>

To 40 g of distilled water there was added 3.04 g of silver nitrate, and the components were mixed until dissolution. Next, 20 g of BEA zeolite powder with a SAR ($SiO_2$/$Al_2O_3$ ratio) of 28 was added and the mixture was mixed for 30 minutes. The obtained mixed solution was dried at 250°C for 12 hours or longer. The obtained dry powder was then fired at 400°C for 2 hours to obtain silver-supporting zeolite E. The silver content, silver ion content ratio and inhibiting silver content ratio of the silver-supporting zeolite E were determined by the same methods as for silver-supporting zeolite A. The silver-supporting zeolite E had a silver content of 8.9 mass%, a silver ion content ratio of 0.967 and an inhibiting silver content ratio of 0.033.

<HC adsorption of silver-supporting zeolite E>

The HC adsorption of the silver-supporting zeolite E was determined by the same method as Example 3. The HC adsorption of the silver-supporting zeolite E was 12.90 mg/g-zeolite.

<Comparative Example 1>

<Production of silver-supporting zeolite "a">

To 40 g of distilled water there was added 5.70 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite "a". The silver content, silver ion content ratio and inhibiting silver content ratio of the silver-supporting zeolite "a" were determined by the same methods as for silver-supporting zeolite A. The silver-supporting zeolite "a" had a silver content of 19.2 mass%, a silver ion content ratio of 0.904 and an inhibiting silver content ratio of 0.096.

<HC adsorption of silver-supporting zeolite "a">

The HC adsorption of the silver-supporting zeolite "a" was determined by the same method as Example 3. The HC adsorption of the silver-supporting zeolite "a" was 9.60 mg/g-zeolite.

<Comparative Example 2>

<Production of silver-supporting zeolite "b">

To 40 g of distilled water there was added 7.56 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 80°C for 12 hours or longer. The obtained dry powder was then fired at 400°C for 2 hours to obtain silver-supporting zeolite "b". The silver content, silver ion content ratio and inhibiting silver content ratio of the silver-supporting zeolite "b" were determined by the same methods as for silver-supporting zeolite A. The silver-supporting zeolite "b" had a silver content of 25.6 mass%, a silver ion content ratio of 0.813 and an inhibiting silver content ratio of 0.187.

<HC adsorption of silver-supporting zeolite "b">

The HC adsorption of the silver-supporting zeolite "b" was determined by the same method as Example 3. The HC adsorption of the silver-supporting zeolite "b" was 7.95 mg/g-zeolite.

<Comparative Example 3>

<Production of silver-supporting zeolite "c">

To 40 g of distilled water there was added 3.04 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 250°C for 12 hours or longer. The obtained dry powder was then fired at 500°C for 2 hours to obtain silver-supporting zeolite "c". The silver content, silver ion content ratio and inhibiting silver content ratio of the silver-supporting zeolite "c" were determined by the same methods as for silver-supporting zeolite A. The silver-supporting zeolite "c" had a silver content of 8.9 mass%, a silver ion content ratio of 0.907 and an inhibiting silver content ratio of 0.093.

<Comparative Example 4>

<Production of silver-supporting zeolite "d">

To 40 g of distilled water there was added 3.04 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 250°C for 12 hours or longer. The obtained dry powder was then fired at 600°C for 2 hours to obtain silver-supporting zeolite "d". The silver content, silver ion content ratio and inhibiting silver content ratio of the silver-supporting zeolite "d" were determined by the same methods as for silver-supporting zeolite A. The silver-supporting zeolite "d" had a silver content of 8.9 mass%, a silver ion content ratio of 0.770 and an inhibiting silver content ratio of 0.230.

<Comparative Example 5>

<Production of silver-supporting zeolite "e">

To 40 g of distilled water there was added 3.04 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 250°C for 12 hours or longer. The obtained dry powder was then fired at 700°C for 2 hours to obtain silver-supporting zeolite "e". The silver content, silver ion content ratio and inhibiting silver content ratio of the silver-supporting zeolite "e" were determined by the same methods as for silver-supporting zeolite A. The silver-supporting zeolite "e" had a silver content of 8.9 mass%, a silver ion content ratio of 0.764 and an inhibiting silver content ratio of 0.236.

<Comparative Example 6>

<Production of silver-supporting zeolite "f">

To 40 g of distilled water there was added 3.04 g of silver nitrate, and the components were mixed until dissolution. Next, 20 g of BEA zeolite powder with a SAR ($SiO_2/Al_2O_3$ ratio) of 28 was added and the mixture was mixed for 30 minutes. The obtained mixed solution was dried at 250°C for 12 hours or longer. The obtained dry powder was then fired at 800°C for 2 hours to obtain silver-supporting zeolite "f". The silver content, silver ion content ratio and inhibiting silver content ratio of the silver-supporting zeolite "f" were determined by the same methods as for silver-supporting zeolite A. The silver-supporting zeolite "f" was confirmed to have a silver content of 8.9 mass%, a silver ion content ratio of 0.725 and an inhibiting silver content ratio of 0.275.

<HC adsorption of silver-supporting zeolite "f">

The HC adsorption of the silver-supporting zeolite "f" was determined by the same method as Example 3. The HC adsorption of the silver-supporting zeolite "f" was 7.70 mg/g-zeolite.

Table 1 shows the production conditions and the silver-supporting zeolite analysis results, for the silver-supporting zeolites A to E produced in Examples 1 to 5. Table 2 shows the production conditions and the silver-supporting zeolite analysis results, for the silver-supporting zeolites "a" to "f" produced in Comparative Examples 1 to 6.

[Table 1]

Table 1

| | | | Example 1 | Example 2 | Example 3 | Example 4 | Example 5 |
|---|---|---|---|---|---|---|---|
| | | | Silver-supporting zeolite A | Silver-supporting zeolite B | Silver-supporting zeolite C | Silver-supporting zeolite D | Silver-supporting zeolite E |
| Production conditions | Silver nitrate addition amount | g/20 g-zeolite | 0.76 | 1.90 | 3.04 | 3.78 | 3.04 |
| | Drying temperature | °C | 80 | 80 | 80 | 80 | 250 |
| | Firing temperature | °C | 400 | 400 | 400 | 400 | 400 |
| Silver-supporting zeolite analysis results | Silver content | wt% | 2.2 | 6.4 | 8.9 | 12.8 | 8.9 |
| | Silver ion content ratio | - | 0.962 | 0.983 | 0.942 | 0.949 | 0.967 |
| | Inhibiting silver content ratio | - | 0.038 | 0.017 | 0.058 | 0.051 | 0.033 |

[Table 2]

Table 2

|  |  |  | Comp. Example 1 | Comp. Example 2 | Comp. Example 3 | Comp. Example 4 | Comp. Example 5 | Comp. Example 6 |
|---|---|---|---|---|---|---|---|---|
|  |  |  | Silver-supporting zeolite "a" | Silver-supporting zeolite "b" | Silver-supporting zeolite "c" | Silver-supporting zeolite "d" | Silver-supporting zeolite "e" | Silver-supporting zeolite "f" |
| Production conditions | Silver nitrate addition amount | g/20 g-zeolite | 5.70 | 7.56 | 3.04 | 3.04 | 3.04 | 3.04 |
|  | Drying temperature | °C | 80 | 80 | 250 | 250 | 250 | 250 |
|  | Firing temperature | °C | 400 | 400 | 500 | 600 | 700 | 800 |
| Silver-supporting zeolite analysis results | Silver content | wt% | 19.2 | 25.6 | 8.9 | 8.9 | 8.9 | 8.9 |
|  | Silver ion content ratio | - | 0.904 | 0.813 | 0.907 | 0.770 | 0.764 | 0.725 |
|  | Inhibiting silver content ratio | - | 0.096 | 0.187 | 0.093 | 0.230 | 0.236 | 0.275 |

In Examples 1 to 5 and Comparative Examples 1 to 6, silver-supporting zeolite was produced by:

(a) ion-exchange treatment of zeolite with a silver nitrate aqueous solution, and

(b) firing of the ion-exchange treated zeolite.

When the amount of silver nitrate charged in the ion-exchange treatment (a) was low, the silver ion content ratio tended to be high. With a firing temperature of 400°C and a silver content of lower than 15.0 mass%, it was possible to obtain silver-supporting zeolite with a silver ion content ratio of 0.910 or greater (Examples 1 to 4 and Comparative Examples 1 and 2). If the silver content is below this limit, the abundance of silver in the zeolite is reduced and aggregation between silver molecules is thus inhibited, inhibiting formation of metallic silver or silver clusters and consequently increasing the silver ion content ratio.

With a firing temperature of below 500°C during the firing (b), it was possible to obtain silver-supporting zeolite with a high silver ion content ratio (Examples 3 and 5). When the firing temperature was 500°C or higher, on the other hand, silver-supporting zeolite with a low silver ion content ratio was obtained (Comparative Examples 3 to 6). Presumably, in low-temperature firing, thermal diffusion of silver nitrate in the ion-exchanged zeolite was suppressed and decomposition took place while maintaining dispersion of the silver nitrate, causing the silver ion content ratio to be higher.

Table 3 shows the results of HC adsorption testing for Examples 3 to 5, Comparative Examples 1 to 2 and Comparative Example 6.

[Table 3]

Table 3

| | | Performance evaluation of silver-supporting zeolite | | |
|---|---|---|
| | | HC adsorption | | |
| | | mg/g-zeolite | | |
| Example 3 | Silver-supporting zeolite C | 13.00 |
| Example 4 | Silver-supporting zeolite D | 11.48 |
| Example 5 | Silver-supporting zeolite E | 12.90 |
| Comp. Example 1 | Silver-supporting zeolite "a" | 9.60 |
| Comp. Example 2 | Silver-supporting zeolite "b" | 7.95 |
| Comp. Example 6 | Silver-supporting zeolite "f" | 7.70 |

In Examples 3 to 5, Comparative Examples 1 to 2 and Comparative Example 6, the HC adsorptions of silver-supporting zeolites with different silver contents and silver ion content ratios were measured. Fig. 1 is a graph comparing the HC adsorptions and silver ion content ratios of silver-supporting zeolites with the same firing temperature but different silver contents. As seen in Fig. 1, a silver content up to a certain amount, and a high silver ion content ratio, tended to result in greater HC adsorption of the silver-supporting zeolite.

Fig. 2 is a graph comparing the HC adsorptions and silver ion content ratios of silver-supporting zeolites with the same silver content but different silver ion content ratios based on firing temperature. As seen in Fig. 2, silver-supporting zeolite with a high silver ion content ratio exhibited high HC adsorption.

All of the silver-supporting zeolites with high HC adsorption contained large amounts of silver ions and low amounts of inhibiting silver (metallic silver or silver clusters), presumably resulting in inhibited obstruction of the zeolite pores and satisfactory adsorption properties. Presumably the silver-supporting zeolite with high HC adsorption could be obtained not only by adding silver to the zeolite but also by specifying the state in which the silver was supported.

<Example 6>

<Production of silver-supporting zeolite F (additional firing of silver-supporting zeolite C)>

The silver-supporting zeolite C obtained in Example 3 was further fired for 2 hours at 600°C to obtain silver-supporting zeolite F. The silver content, silver ion content ratio and inhibiting silver content ratio of the silver-supporting zeolite F were determined by the same methods as for silver-supporting zeolite A. The silver-supporting zeolite F had a silver content of 8.9 mass%, a silver ion content ratio of 0.910 and an inhibiting silver content ratio of 0.090.

Table 3 shows analysis results for the silver-supporting zeolite F of Example 6, in comparison with the silver-supporting zeolite C before firing and the silver-supporting zeolite "d" fired at 600°C.

[Table 4]

Table 4

| | | | Example 6 | (Reference) | |
|---|---|---|---|---|---|
| | | | Silver-supporting zeolite F | Silver-supporting zeolite C | Silver-supporting zeolite "d" |
| Production conditions | Silver nitrate addition amount | g/20 g-zeolite | 3.04 | 3.04 | 3.04 |
| | Drying temperature | °C | 80 | 80 | 250 |
| | Firing temperature | °C | 400 | 400 | 600 |
| | Additional firing temperature | °C | 600 | | |
| Silver-supporting zeolite analysis results | Silver content | wt% | 8.9 | 8.9 | 8.9 |
| | Silver ion content ratio | - | 0.910 | 0.942 | 0.770 |
| | Inhibiting silver content ratio | - | 0.090 | 0.058 | 0.230 |

The zeolite obtained by firing at 400°C maintained its silver ion content ratio even with further firing at 600°C (Example 6 and Comparative Example 4). It was conjectured that the silver ion content ratio was maintained due to the fact that silver ions formed and supported by firing at 400°C do not aggregate together to form metallic silver or silver clusters unless they have greater energy, and at least greater energy than by firing at 600°C.

Preferred embodiments of the silver-supporting zeolite, exhaust gas purification catalyst, exhaust gas purification device, exhaust gas purification method and method for producing silver-supporting zeolite of the invention have been described in detail above, but a person skilled in the art will appreciate that modifications may be made without deviating from the scope of the claims.

**Claims**

1. Silver-supporting zeolite wherein:

   the silver is present as at least one type from among silver ion, elemental silver and silver compounds,
   the silver ion content ratio in the silver is 0.910 or greater, and
   the silver content is 15.0 mass% or lower with respect to the total weight of the silver-supporting zeolite.

2. The silver-supporting zeolite according to claim 1, wherein the silver-supporting zeolite has a BEA-type crystal structure.

3. The silver-supporting zeolite according to claim 1, wherein the SAR of the silver-supporting zeolite is 20 to 40.

4. An exhaust gas purification catalyst comprising silver-supporting zeolite according to claim 1.

5. An exhaust gas purification device comprising a honeycomb substrate and an exhaust gas purification catalyst according to claim 4 supported on the honeycomb substrate.

6. An exhaust gas purification method which comprises purifying exhaust gas with an exhaust gas purification catalyst according to claim 4.

7. The method for producing silver-supporting zeolite according to any one of claims 1 to 3, the method comprising:

ion-exchange treatment of zeolite with a silver-containing aqueous solution, and
firing of the ion-exchanged zeolite at below 500°C.

Fig. 1

EP 4 733 257 A1

# Fig. 2

## INTERNATIONAL SEARCH REPORT

| International application No. |
|---|
| **PCT/JP2024/017961** |

### A. CLASSIFICATION OF SUBJECT MATTER

*C01B 39/02*(2006.01)i; *B01D 53/94*(2006.01)i; *B01J 29/70*(2006.01)i; *B01J 37/08*(2006.01)i; *B01J 37/30*(2006.01)i; *F01N 3/10*(2006.01)i; *F01N 3/28*(2006.01)i

FI: C01B39/02; B01D53/94 222; B01D53/94 245; B01D53/94 280; B01J29/70 A; B01J37/08; B01J37/30 ZAB; F01N3/10 A; F01N3/28 301Z

According to International Patent Classification (IPC) or to both national classification and IPC

### B. FIELDS SEARCHED

Minimum documentation searched (classification system followed by classification symbols)

C01B39/02; B01D53/94; B01J29/70; B01J37/08; B01J37/30; F01N3/10; F01N3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 07-185326 A (IDEMITSU KOSAN CO., LTD.) 25 July 1995 (1995-07-25) claims, paragraphs [0001], [0011]-[0016], [0024] | 1-2, 4-7 |
| Y | | 3 |
| X | WO 2023/038085 A1 (TOSOH CORPORATION) 16 March 2023 (2023-03-16) claims, paragraphs [0066]-[0077], table 1 | 1, 3-7 |
| Y | JP 2004-358454 A (SUMITOMO METAL MINING CO., LTD.) 24 December 2004 (2004-12-24) claims, paragraphs [0020], [0028] | 3 |
| A | JP 11-244664 A (HINO MOTORS, LTD.) 14 September 1999 (1999-09-14) | 1-7 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017961**

| Patent document cited in search report | | | Publication date (day/month/year) | Patent family member(s) | Publication date (day/month/year) |
|---|---|---|---|---|---|
| JP | 07-185326 | A | 25 July 1995 | (Family: none) | |
| WO | 2023/038085 | A1 | 16 March 2023 | (Family: none) | |
| JP | 2004-358454 | A | 24 December 2004 | (Family: none) | |
| JP | 11-244664 | A | 14 September 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017154985 A
- JP 2005144253 A
- WO 2017146130 A
- JP 2006021153 A